# FASCICULE DE BREVET EUROPEEN

(11) **EP 3 554 806 B1**
(45) Date de publication et mention de la délivrance du brevet: **03.05.2023**
(21) Numéro de dépôt: 17808105.5
(22) Date de dépôt: 20.11.2017
(51) Int. Cl.: B29C 70/54, B29C 70/52, F03D 1/06

(54) **PROCÉDÉ DE FABRICATION D'UN PROFILE AVEC UNE BANDE D'ARRACHAGE**
VERFAHREN ZUR HERSTELLUNG EINES PROFILIERTEN ELEMENT MIT AUFREISSSTREIFEN
PROCESS FOR PRODUCING A PROFILED MEMBER WITH A TEAR STRIP

(30) Priorité: 13.12.2016 FR 1662359
(43) Date de publication de la demande: 23.10.2019
(73) Titulaire: Epsilon Composite, 33340 Gaillan en Medoc (FR)
(72) Inventeur: FERRER, Denis, 33180 Vertheuil (FR); LATRON, Ambroise, 33990 Hourtin (FR)
(74) Mandataire: Novagraaf Technologies
(86) Numéro de dépôt international: PCT/FR2017/053180
(87) Numéro de publication internationale: WO 2018/109297

(56) Documents cités:
- WO-A1-2014/079456
- WO-A2-2012/161741
- FR-A1- 2 962 681
- GB-A- 2 510 340
- US-A1- 2004 156 672
- US-A1- 2013 287 589
- US-A1- 2014 099 456

## Description

### Domaine technique de l'invention :

La présente invention se rapporte à un procédé de fabrication d'un profilé destiné à être collé sur un autre profilé destiné notamment à réaliser des renforts de pales d'éoliennes, des pales d'éolienne ou des poutres lamellées/collées utilisées par exemple dans le génie civil, et son procédé de fabrication.

Le collage entre ces deux profilés pourra par exemple servir à réaliser des renforts tels que décrits dans le brevet EP2497945.

Afin de faciliter le collage des profilés entre eux, on dispose une bande d'arrachage également appelé tissu d'arrachage ou de délaminage (aussi appelé en anglais peelply/peel ply) par l'homme du métier sur au moins une de ses deux faces et qui sera retirée avant le collage des profilés. Cette bande d'arrachage permet d'avoir une surface du profilé à la fois propre et suffisamment rugueuse pour faciliter l'accrochage des deux profilés entre eux.

### État de la technique antérieure :

Cette bande d'arrachage peut être disposée pendant le procédé de fabrication du profilé, mais on constate alors qu'un rebord se forme sur le profilé à la périphérie de la bande d'arrachage. Le document WO 2014079456 A1 divulgue un procédé de réalisation d'un profilé pultrudé comprenant une étape de collage d'une bande d'arrachage.

Lors de l'enlèvement de la bande d'arrachage, ce rebord va rester en relief sur le côté du profilé et va, d'une part empêcher un contact optimal entre le profilé et celui sur lequel il doit être collé et, d'autre part lors de l'arrachement à froid, générer occasionnellement une déchirure de la bande d'arrachage et/ou laisser des fils résiduels sur le profilé gênant ainsi son collage. Une opération de nettoyage supplémentaire devant être alors réalisée pour finaliser la préparation au collage du profilé. Il y a aussi, un possible recouvrement de la bande d'arrachage par du fils de carbone et/ou de la matrice dans le procédé, ce recouvrement vient encastrer les bords de la bande pouvant ainsi augmenter significativement la probabilité de générer des déchirures ou des fils résiduels décrit ci-dessus.

Si l'enlèvement de la bande d'arrachage est relativement aisé quand elle est en polyamide (PA) et/ou que le profilé est en carbone-vinylester, cela peut être particulièrement difficile si on utilise un thermoplastique tel que du polyester (PES) à la place du PA pour la bande d'arrachage avec un profilé en carbone/époxyde.

Il possible de réaliser une abrasion de surface en lieu et place de la bande d'arrachage, mais on a alors une présence de poussière qui nécessite un nettoyage au solvant avant l'application de la colle.

On peut aussi faire une préparation de surface non mécanique mais uniquement chimique (primaire ou plasma froid, etc...), mais cela présente un risque accru de rupture des collages en fatigue, car la surface du profilé reste sensiblement plane.

Il est également possible d'utiliser un agent anti adhérent placé sous la bande d'arrachage, mais cet agent dégrade l'adhérence des faces à coller.

Il est connu d'utiliser un film sous le coin ou le bord d'une couche de liaison afin de faciliter son arrachage et la formation de fissure sur la surface du composite, mais ce film représente un coût supplémentaire pour la fabrication du profilé.

Il également connu de retourner le bord de la bande d'arrachage afin d'avoir une prise, cependant cette solution n'est pas satisfaisante car elle nécessite une plus grande bande d'arrachage que la surface du profilé, elle est plus difficile à mettre en place et donc plus coûteuse à mettre en oeuvre.

### Exposé de l'invention :

L'objet de l'invention est de proposer un procédé de fabrication d'un profilé avec une bande d'arrachage ne présentant pas ces inconvénients et le profilé obtenu.

L'objet de l'invention concerne un procédé de réalisation d'un profilé selon la revendication 1. Le profilé réalisé est ainsi plus facile à utiliser. Lors des étapes de pultrusion standard, il y a une imprégnation, un essorage et une polymérisation dans une filière, dans l'invention, l'amorçage du décollage est réalisé en ligne par les couteaux en sortie de filière quand le produit est encore à la température adéquate en fin de polymérisation, le profilé pultrudé est tiré et enroulé à longueur des plats avec les bandes d'arrachage amorcé sur tout ou partie du profilé. Le profilé obtenu a deux faces présentant au moins une bande d'arrachage avec deux bords disposée et collée sur une face dudit profilé, et dont la bande d'arrachage a au moins un bord décollé. Le bord ainsi décollé permet à la fois une prise en main aisée et un enlèvement plus facile de la bande d'arrachage, mais aussi d'éviter qu'un bout de la bande d'arrachage reste sur le profilé et gène le collage des profilés entre eux. Les deux bords de la bande d'arrachage peuvent être décollés et quand le profilé est recouvert par une bande d'arrachage sur chaque face, les deux bandes d'arrachage sont décollés chacune d'au moins un côté. Le profilé peut avoir une forme plane ou circulaire. Par ailleurs, comme le profilé est en matériau composite pultrudé, il présente des performances mécaniques transverses performantes, en particulier un profilé en carbone/époxyde a des performances mécaniques perpendiculaires au sens préférentiel des fibres de renfort jusqu' à 5 fois supérieure à un profilé en carbone/vinylester.

Le couteau peut être disposé en fin du processus de fabrication du profilé et ainsi être automatisé. Ce qui permet un gain de coût de main d'oeuvre et la suppression des opérations de finition. Les pièces peuvent avoir toute forme et section réalisable en pultrusion.

Un amorçage à chaud de la bande d'arrachage permet de diminuer les contraintes d'accroche de celle-ci sur le profilé. Idéalement la température doit être proche de la température de transition vitreuse (Tg) de la matrice du composite, par exemple : température mini 20°C sous la Tg.

Selon l'invention, le décollage à chaud est effectué durant le procédé de polymérisation pour bénéficier d'une résistance incomplète de la matrice et faciliter ainsi le décollage.

Avantageusement, que le couteau présente une inclinaison par rapport au plan du profilé. On est ainsi certain qu'aucun rebord ne subsiste sur le profilé.

Avantageusement, le couteau est aligné avec le plan du profilé. Le profilé présente ainsi une surface globalement plane.

Avantageusement, le profilé et la bande d'arrachage sont usinés au niveau du deuxième bord de la bande d'arrachage. Cet usinage permet de supprimer le rebord apparaissant sur le profilé et ainsi permettre le contact du profilé sur la totalité de la surface correspondant à la bande d'arrachage. Il est possible de prévoir que les deux bords sont usinés, il n'y a alors pas de décollage de la bande d'arrachage. Ce dernier mode de réalisation n'est pas couvert par l'objet des revendications 1 à 6.

L'usinage peut être partiel ou total.

Avantageusement, on recouvre un côté du profilé d'un voile au niveau du deuxième bord de la bande d'arrachage et ledit voile est placé sous le bord de ladite bande d'arrachage. Le voile disposé sur le côté du profilé permet d'éviter un possible recouvrement de la bande d'arrachage par du fils de carbone et/ou de la matrice qui se forme dans le procédé. Il est possible de prévoir que les deux bords du profilé sont recouverts d'un voile, il n'y a alors pas de décollage de la bande d'arrachage. Ce dernier mode de réalisation n'est pas couvert par l'objet des revendications 1 à 6.

Selon une disposition particulière, on retourne au moins un bord de la bande d'arrachage. Ainsi retourné la bande d'arrachage évite toute insertion dans le rebord du profilé. Le bord retourné peut facilement être dégagé. Il est possible de prévoir que tous les bords de la bande d'arrachage sont retournés. Ce dernier mode de réalisation n'est pas couvert par l'objet des revendications 1 à 6.

La présente demande concerne aussi un profilé avec deux faces présentant au moins une bande d'arrachage avec deux bords disposée et collée sur un côté dudit profilé et réalisé par le procédé ayant au moins une des caractéristiques précédentes. Ce profilé n'est néanmoins pas couvert par l'objet des revendications 1 à 6.

La demande concerne également un ensemble, non couvert par l'objet des revendications 1 à 6, comprenant au moins deux profilés avec au moins une des caractéristiques précédentes, les deux profilés étant collés l'un avec l'autre. Il est également possible de coller le profiler sur d'autres types de surfaces tels que du béton, de l'acier...

### Description des figures :

D'autres avantages pourront encore apparaître à l'homme du métier à la lecture des exemples ci-dessous, illustrés par les figures annexées, donnés à titre d'exemple :
- La figure 1 est une vue en coupe d'un profilé recouvert d'une bande d'arrachage de l'état de la technique,
- La figure 1a montre le détail A de la figure 1,
- La figure 2 est une vue en coupe de deux profilés collés de l'état de la technique,
- La figure 3 est un profilé obtenu par un procédé selon un mode de réalisation de l'invention avec différentes position du couteau,
- Les figures 3a et 3b illustre le détail B de la figure 3 avec deux autres positions possible du couteau,
- La figure 4 est une première variante de profilé,
- La figure 5 est une deuxième variante de profilé,
- La figure 6 illustre une troisième variante de profilé.

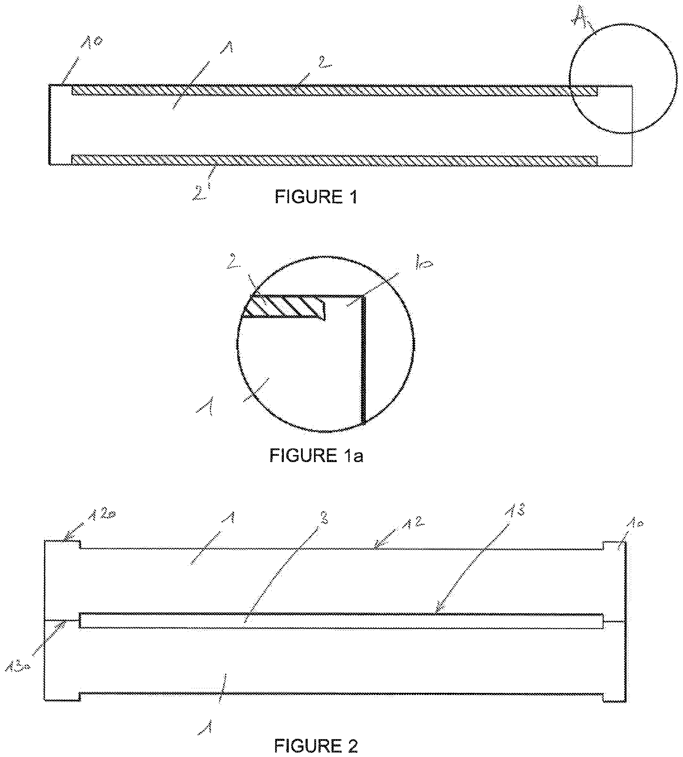

Le profilé 1 de l'état de la technique, illustré figure 1, est recouvert par une bande d'arrachage 2, cette bande d'arrachage 2 est disposée sur le profilé lors de sa fabrication d'où la création d'un rebord 10 entre le bord de la bande d'arrachage 2 et l'extrémité du profilé 1. Ce rebord 10 peut encastrer l'extrémité de la bande d'arrachage 2, comme visible sur le détail de la figure 1a. Après l'enlèvement de la bande 2, le rebord 10 demeure et lors du collage des profilés 1 entre eux un espace 3 reste, limitant le collage des faces 12 et 13 des profilés à des zones 120 et 130 restreintes. On voit également que le rebord 10 gène la saisie de la bande d'arrachage 2, d'où un risque de déchirement et/ou de reste de fils sur le rebord 10.

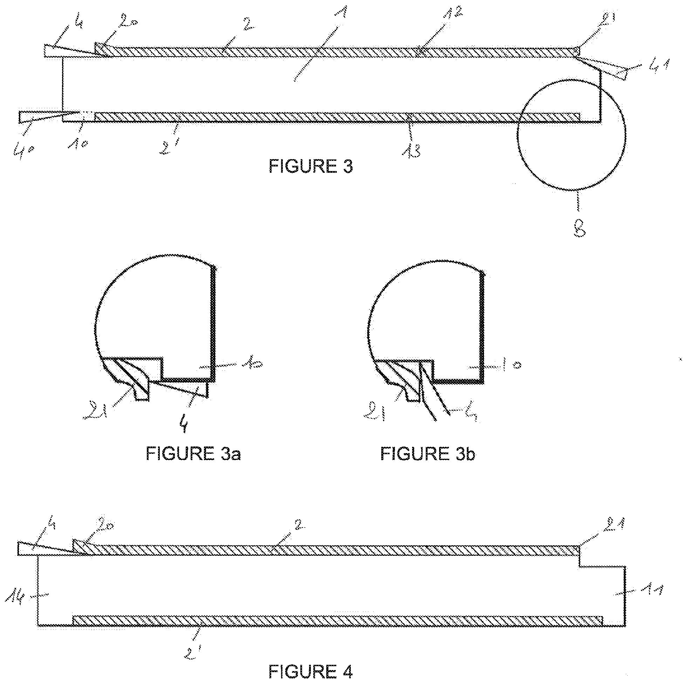

Le profilé obtenu par un procédé selon un mode de réalisation de l'invention, illustré à la figure 3, montre un couteau 4 coupant le rebord 10 du profilé et décollant le bord 20 de la bande d'arrachage 2. Un deuxième couteau 40 est disposé sur l'autre face pour décoller la deuxième bande d'arrachage 2'. Dans cet exemple, le couteau 40 n'a pas complètement coupé le rebord 10. Le couteau est mobile afin de pouvoir le positionner selon la largeur de la bande. De l'autre côté est illustré une variante, où un troisième couteau 41 est incliné par rapport au plan du profilé 1 permettant d'assurer que la surface de collage des profilés correspond à une zone où était positionnée la bande d'arrachage 2.

On peut voir sur les figures 3a et 3b, deux autres dispositions possibles du couteau 4, parallèle au rebord 10 (figure 3a) ou incliné (figure 3b).

Sur la figure 4, selon une première variante, un coté 11 du profilé 1 est usiné partiellement afin de dégager le bord 21 de la bande de collage 2 et en faciliter ainsi l'accès. Dans le cas où le profilé 1 comporte deux bandes d'arrachage 2 et 2', on usinera les deux faces 12 et 13 du profilé 1. L'usinage peut également être réalisé sur la totalité de l'épaisseur du profilé 1, libérant ainsi les deux bandes d'arrachage 2 et 2'. Il est également possible d'usiner les deux cotés 11 et 14 du profilé 1, il n'y a alors pas de décollement de la bande d'arrachage. Ce dernier mode de réalisation n'est pas couvert par l'objet des revendications 1 à 6.

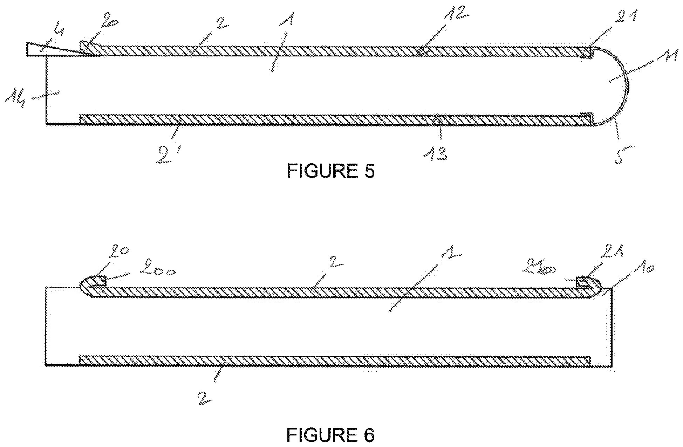

On peut voir à la figure 5 une deuxième variante, où on a disposé un voile 5 sur le côté 11 du profilé 1 afin d'éviter que ne se forme un encastrement ou un recouvrement de la bande d'arrachage par du fils de carbone et/ou de la matrice. Le bord 21 de la bande d'arrachage 2 est indépendant du profilé et peut être facilement attrapée. Il est possible de prévoir un voile 5 des deux côtés 11 et 14 du profilé 1, il n'y a alors pas de décollement de la bande d'arrachage 2. Ce dernier mode de réalisation n'est pas couvert par l'objet des revendications 1 à 6.

On peut voir à la figure 6, une troisième variante, où on a replié aux extrémités 20 et 21 la bande d'arrachage pour permettre que le rebord 10 ne puisse pas être en contact avec ces extrémités 20 et 21 de la bande d'arrachage, il n'y a alors plus de risque de résidu de bande après décollage de la bande d'arrachage. Il n'y a alors pas de décollement de la bande d'arrachage 2. Les parties repliées 200 et 210 peuvent facilement être détachées à la main ou avec un couteau. Ce dernier mode de réalisation n'est pas couvert par l'objet des revendications 1 à 6.

### Exposé détaillé d'un mode de réalisation

Nous allons maintenant décrire un procédé préféré de fabrication de ces profilés.

Le profilé 1 est réalisé selon un procédé avec une première partie standard de moulage ou de pultrusion, avec la pose d'au moins une bande d'arrachage 2, ensuite le profilé 1 en fin de polymérisation, encore chaud, passe devant des couteaux (4, 40, 41) où l'on décolle au moins un bord 20 de la bande d'arrachage 2.

Pour les profilés pultrudés, il y a une imprégnation des fibres, un essorage, une pose des bandes d'arrachage, puis une polymérisation dans la filière, un amorçage de décollement de la bande d'arrachage en ligne par les couteaux en sortie de filière quand le produit est encore à la température adéquate en fin de polymérisation, une traction du profilé pultrudé, et un enroulement à longueur des plats avec les bandes d'arrachage amorcé sur tout ou partie du profilé.

Il est envisageable de réaliser l'arrachement à froid même si c'est plus complexe à réaliser car l'adhésion et l'encastrement de la bande sur la matrice est plus importante, en particulier pour une bande en PES sur un profilé en carbone/epoxyde. Ce mode de réalisation n'est pas couvert par l'objet des revendications 1 à 6.

On peut également réaliser l'arrachement à chaud en dehors du procédé de fabrication du profilé, il faut alors prévoir une étape supplémentaire de réchauffement du profilé au moment de l'arrachage de la bande, soit en ligne avant le collage des profilés entre eux, soit en reprise dans les autres cas. Ce mode de réalisation n'est pas couvert par l'objet des revendications 1 à 6.

## Revendications

1. Procédé de réalisation d'un profilé (1), comprenant une étape de collage d'une bande d'arrachage (2) et une étape d'amorçage de décollage d'au moins un bord (20) de la bande d'arrachage (2), le profilé étant pultrudé et l'étape d'amorçage de décollage étant réalisée à chaud en ligne en sortie de filière par un couteau (4) quand le produit est encore à la température adéquate en fin de polymérisation, le profilé pultrudé étant tiré et enroulé à longueur des plats avec les bandes d'arrachage amorcé sur tout ou partie du profilé.

2. Procédé selon la revendication précédente, **caractérisé en ce que** le couteau (4) présente une inclinaison par rapport au plan du profilé (1).

3. Procédé selon la revendication 1, **caractérisé en ce que** le couteau (4) est aligné avec le plan du profilé (1).

4. Procédé selon une des revendications précédentes **caractérisé en ce que** le profilé (1) et la bande d'arrachage(2) sont usinés au niveau d'un deuxième bord (21) de la bande d'arrachage (2).

5. Procédé selon la revendication précédente, **caractérisé en ce qu'**on recouvre d'un voile (5) au niveau du deuxième bord (21) de la bande d'arrachage (2) un coté du profilé (1) et que ledit voile (5) est placé sous le bord (21) de ladite bande d'arrachage (2).

6. Procédé selon une des revendications 1 à 5, **caractérisé en ce qu'**on retourne un bord de la bande d'arrachage (2).

## Patentansprüche

1. Verfahren zum Herstellen eines Profils (1), umfassend einen Schritt eines Klebens eines Aufreißstreifens (2) und einen Schritt eines Einleitens eines Ablösens von mindestens einer Kante (20) des Aufreißstreifens (2), wobei das Profil pultrudiert ist und der Schritt des Einleitens des Ablösens heiß inline an einem Ausgang eines Schneideisens durch ein Messer (4) durchgeführt wird, wenn das Produkt an dem Ende einer Polymerisation noch die entsprechende Temperatur vorweist, wobei das pultrudierte Profil auf eine Länge von Platten gezogen und aufgerollt wird, wobei die Aufreißstreifen auf dem gesamten oder einem Teil des Profils eingeleitet werden.

2. Verfahren nach dem vorstehenden Anspruch,
**dadurch gekennzeichnet, dass** das Messer (4) eine Neigung relativ zu der Ebene des Profils (1) aufweist.

3. Verfahren nach Anspruch 1, **dadurch gekennzeichnet, dass** das Messer (4) an der Profilebene (1) ausgerichtet ist.

4. Verfahren nach einem der vorstehenden Ansprüche,
**dadurch gekennzeichnet, dass** das Profil (1) und der Aufreißstreifen (2) an einer zweiten Kante (21) des Aufreißstreifens (2) bearbeitet werden.

5. Verfahren nach dem vorstehenden Anspruch,
**dadurch gekennzeichnet, dass** eine Seite des Profils (1) mit einer Hülle (5) in Höhe der zweiten Kante (21) des Aufreißstreifens (2) bedeckt wird und dass die Hülle (5) unter der Kante (21) des Aufreißstreifens (2) platziert ist.

6. Verfahren nach einem der Ansprüche 1 bis 5,
**dadurch gekennzeichnet, dass** eine Kante des Aufreißstreifens (2) umgeschlagen wird.

## Claims

1. Method of producing a profile (1), comprising a step of gluing a tear-off strip (2) and a step of initiating the peeling of at least one edge (20) of the tear-off strip (2), the profile being pultruded and the step of initiating the peeling being carried out hot in line at the exit by a knife (4) when the product is still at the appropriate temperature at the end of polymerisation, the pultruded profile being pulled and wound to the length of the flats with the tear-off strips initiated on all or part of the profile.

2. Method according to the previous claim, **characterised in that** the knife (4) has an inclination to the plane of the profile (1).

3. Method according to claim 1, **characterised in that** the knife (4) is aligned with the plane of the profile (1).

4. Method according to one of the preceding claims, **characterised in that** the profile (1) and the tear-off strip (2) are machined at a second edge (21) of the tear-off strip (2).

5. Method according to the preceding claim, **characterised in that** one side of the profile (1)in the second edge (21) of the tear-off strip (2) is covered by a veil (5) and **in that** the said veil (5) is placed under the edge (21) of said tear-off strip (2).

6. Method according to one of claims 1 to 5, **characterised in that** one edge of the tear-off strip (2) is turned over.
